# EUROPÄISCHE PATENTSCHRIFT

(11) **EP 1 392 551 B1**
(45) Veröffentlichungstag und Bekanntmachung des Hinweises auf die Patenterteilung: **03.01.2007**
(21) Anmeldenummer: 02732712.1
(22) Anmeldetag: 14.05.2002
(51) Int. Cl.: B60R 21/20

(54) **VORRICHTUNG ZUR ABDECKUNG EINES AIRBAGS UND VERFAHREN ZU DEREN HERSTELLUNG**
DEVICE FOR COVERING AN AIRBAG AND METHOD FOR PRODUCTION THEREOF
DISPOSITIF POUR RECOUVRIR UN COUSSIN GONFLABLE DE SECURITE ET SON PROCEDE DE PRODUCTION

(30) Priorität: 01.06.2001 DE 10126911
(43) Veröffentlichungstag der Anmeldung: 03.03.2004
(73) Patentinhaber: Intier Automotive Eybl Interiors GmbH, 94315 Straubing (DE)
(72) Erfinder: CHRISTOPH, Erich, 63179 Obertshausen (DE); KUSEBAUCH, Rolf, H., 94345 Obermotzing (DE)
(86) Internationale Anmeldenummer: PCT/EP2002/005279
(87) Internationale Veröffentlichungsnummer: WO 2002/098713

(56) Entgegenhaltungen:
- EP-A- 0 963 806
- DE-A- 19 843 214
- DE-A- 19 937 373
- JP-A- 10 119 691
- US-B1- 6 224 090

## Beschreibung

Die Erfindung betrifft eine Vorrichtung zur Abdeckung eines Airbags gegenüber dem Innenraum eines Fahrzeugs mit einem formsteifen Trägerteil und einer damit verbundenen, einen Schusskanal für den Airbag überdeckenden Dekorhaut, welche an ihrer dem Trägerteil zugewandten Rückseite mit einer entlang einer vorgesehenen Sollbruchlinie verlaufenden und durch den im Schusskanal sich entfaltenden Airbag aufreißbaren, innenraumseitig unsichtbaren Hautschwächung versehen ist. Weiter betrifft die Erfindung ein Verfahren zur Herstellung einer derartigen Abdeckvorrichtung.

Aus der DE 43 44 523 C2 ist ein derartiges Abdeckelement bekannt, welches an der Rückseite seiner Außenhaut mindestens längs einer Linie einen geringeren Querschnitt aufweisen soll. Als mindestens linienförmiger Einschnitt wird dort speziell ein rückseitig sich erweiternder einzelner Aufreißspalt vorgeschlagen, welcher entlang einer Geraden zentral durch den Aufreißbereich verläuft. Mit der rückseitigen Einkerbung soll erreicht werden, dass der dadurch vorgegebene Durchtrittsbereich des Airbags auf der Dekorseite, d.h. vom Fahrgastraum aus gestalterischen Gründen nicht zu erkennen ist. Es hat sich jedoch herausgestellt, dass vor allem bei sehr tiefen Temperaturen, wie sie zu Prüfzwecken vorgeschrieben werden, gewisse Formhäute unter den hohen Aufreißgeschwindigkeiten beim explosionsartigen Entfalten des Gassacks keine ausreichende Zähigkeit aufweisen. Als Folge davon reißt die Formhaut außerhalb der vorgesehenen Sollbruchlinie unkontrolliert auf und bricht dabei spinnennetzartig, was zu für die Insassen gefährlichem Partikelflug führen kann. Es wurde bereits versucht, dieses Problem dadurch zu lösen, dass die verbleibende Wandstärke im Bereich der Einkerbung weiter reduziert wird. Hierbei ergaben sich jedoch zusätzliche Schwierigkeiten hinsichtlich der geforderten Festigkeit gegen Normalbeanspruchungen von der Fahrgastseite und der gewünschten Unsichtbarkeit der Hautschwächung auch bei langen Alterungszeiten.

Ein weiterer Vorschlag für eine Maßnahme zur Lösung des beschriebenen Problems findet sich in dem Dokument JP 10119691 A1. Offenbart ist ein so genannter Mehrfachschnitt mit mehreren nebeneinander verlaufenden Schnittlinien entlang der Aufreißlinie. Durch den Mehrfachschnitt ergibt sich eine bessere Verteilung der Zugspannung. Allerdings bedingt das Anlegen des Mehrfachschnitts eine deutliche Erhöhung der Herstellkosten.

Ausgehend hiervon liegt der Erfindung die Aufgabe zugrunde, die vorgenannten Nachteile zu vermeiden und eine kostengünstig herstellbare Abdeckung für einen Airbag anzugeben, die auch bei extrem tiefen Temperaturen und über lange Standzeiten eine zuverlässige Funktion gewährleistet, ohne dass gestalterische Ansprüche beeinträchtigt werden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung sieht vor, dass die Hautschwächung lediglich abschnittsweise als Mehrfachschnittlinie durch mindestens zwei, vorzugsweise drei seitlich nebeneinander liegende Hauteinschnitte gebildet ist. Durch die in engem seitlichem Abstand befindlichen Hauteinschnitte wird auch im Tieftemperaturbereich eine zuverlässige und definierte Rissbildung entlang der vorgesehen Sollbruchlinie erreicht. Ein unkontrollierter Partikelauswurf wird dadurch vermieden. Dabei kann auf die grundsätzlich bewährte Methode der Einbringung von Hautschwächungen zurückgegriffen werden. Insbesondere treten keine wesentlichen Festigkeits- oder Strukturveränderungen auf, welche das Hinterschäumen der Dekorhaut bzw. das Aufziehen auf den Träger beeinträchtigen könnten.

Um Partikelflug zu verhindern, sollte gegenseitige Abstand zwischen den Hauteinschnitten der jeweiligen Mehrfachschnittlinie im Bereich von 0,1 mm bis 1,0 mm liegen und vorzugsweise etwa 0,5 mm betragen.

Um eine optisch ansprechende Gestaltung zu ermöglichen, sollten die Hauteinschnitte in jedem Fall eine durchgängig unter der Wandstärke der Dekorhaut liegende Schnitttiefe besitzen. Dabei kann aufgrund der Mehrfachschnitte die Restwandstärke vergleichsweise groß gewählt werden, wobei sich 0,1 mm bis 0,5 mm, vorzugsweise 0,3 mm Restquerschnitt als günstig herausgestellt haben, um etwaige sichtseitige Abzeichnungen zuverlässig zu vermeiden.

Um die Hautrückseite als vollständige Stützfläche zu erhalten, ist es von Vor teil, wenn die Hauteinschnitte jeweils durch zwei spaltfrei gegeneinander anliegende Schnittflächen der Dekorhaut begrenzt sind.

Ein klappenartiges Aufschwenken der vorgesehen Aufreißpartie wird dadurch ermöglicht, dass die Sollbruchlinie U-förmig oder H-förmig ausgebildet ist.

Eine weitere vorteilhafte Ausführung sieht vor, dass die Hauteinschnitte zerspanungsfrei durch Messerschneiden vorzugsweise mittels einer selbsttätig arbeitenden Schneideinrichtung gebildet sind. Alternativ ist es auch möglich, die Hauteinschnitte durch Laser- oder Ultraschallschneiden rückseitig in die Dekorhaut einzubringen.

Vorteilhafterweise ist die Dekorhaut vorzugsweise im Pulversinterverfahren als Kunststoff-Formhaut ausgebildet. Dabei ist es hinsichtlich der Alterungsbeständigkeit und Recyclingfähigkeit von besonderem Vorteil, wenn die Dekorhaut aus thermoplastischem Polyurethan oder thermoplastischem Polyolefin besteht.

Im Folgenden wird die Erfindung anhand eines in der Zeichnung in schematischer Weise dargestellten Ausführungsbeispiels näher erläutert. Es zeigen
- Fig. 1: eine als Teil einer Instrumententafel eines Kraftfahrzeugs ausgebildete Abdeckvonichtung zur Abdeckung eines Beifahrer-Airbags in einer perspektivischen fahrzeuginnenraumseitigen Ansicht;
- Fig. 2: einen Schnitt durch die Abdeckvorrichtung bzw. Instrumententafel nach Fig. 1 im Bereich einer durch drei parallele Hauteinschnitte definierten U-förmigen Sollbruchlinie;
- Fig. 3 bis 6: verschiedene Konfigurationen von Hauteinschnitten in einer ausschnittsweisen rückseitigen Ansicht einer Dekorhaut der Instrumententafel nach Fig. 1.

Die in der Zeichnung dargestellte Airbag-Abdeckung wird durch die beifahrerseitige Partie einer Instrumententafel 10 eines Kraftfahrzeugs gebildet. Sie besteht im Wesentlichen aus einem formsteifen Trägerteil 12 und einer darauf gehaltenen Dekorhaut 14, welche rückseitig entlang einer vorgesehenen Aufreiß- bzw. Sollbruchlinie 16 mit einer durch den ausgelösten Airbag aufreißbaren Hautschwächung 18 versehen ist.

Die Dekorhaut 14 ist im Pulversinterverfahren als dünne Formhaut aus einem geeigneten Kunststoff hergestellt. Sie besitzt eine im Einbauzustand in den Fahrzeuginnenraum weisende Sichtseite 20 und eine dem Trägerteil 12 zugewandte Rückseite 22. Grundsätzlich ist es auch möglich, dass die Dekorhaut aus einem anderen Flachmaterial besteht, beispielsweise Echt- oder Kunstleder.

Das Trägerteil 12 ist als Spritzgussteil entsprechend der gewünschten räumlichen Kontur der Instrumententafel 10 ausgebildet.

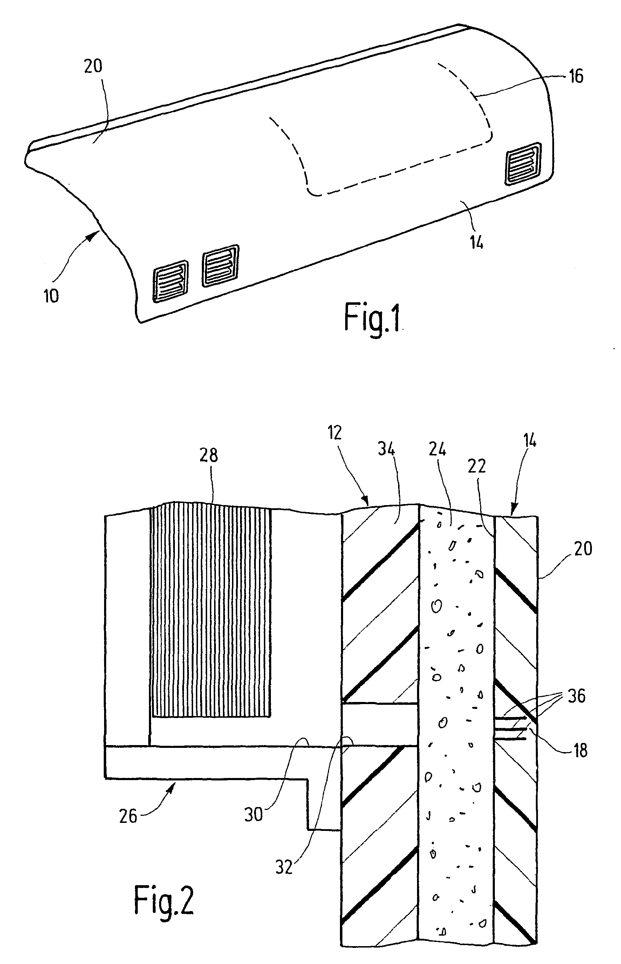

Wie in Fig. 2 gezeigt, ist die Formhaut 14 rückseitig über eine geschäumte Zwischenschicht 24 beispielsweise aus elastischem Polyurethanschaum vollflächig mit dem Trägerteil 12 verbunden. Letzteres trägt an seiner Rückseite ein Airbag-Modul 26, dessen gefalteter Airbag bzw. Gassack 28 im Auslösefall über einen Schusskanal 30 unter Öffnen der Bauteilschichten 12, 24, 14 in den Fahrgastraum hinein entfaltbar ist.

Zu diesem Zweck ist das Trägerteil 12 im Randbereich des Schusskanals 30 mit länglichen Wanddurchbrüchen 32 versehen, die der vorgesehenen Sollbruchlinie 16 folgen, so dass ein klappenartiges Aufschwenken der Abdeckpartie 34 ermöglicht wird. Gegebenenfalls kann auch die Zwischenschicht 24 mit korrespondierenden Wandschwächungen versehen sein (nicht gezeigt).

Um ein sicheres Aufreißen der Formhaut 14 zu gewährleisten, ist deren Hautschwächung 18 fluchtend mit den Wanddurchbrüchen 32 des Trägerteils 12 ausgerichtet. Dabei wird vor allem bei tiefen Temperaturen ein undefiniertes Reißen dadurch verhindert, dass die entlang der Sollbruchlinie 16 verlaufende Hautschwächung 18 zumindest abschnittsweise durch drei seitlich nebeneinander liegende rückseitige Hauteinschnitte 36 gebildet ist. Die Hauteinschnitte 36 weisen eine unter der Wandstärke der Formhaut 14 liegende Schnitttiefe auf, wobei der freigehaltene sichtseitige Restquerschnitt etwa 0,3 mm beträgt, während der gegenseitige Abstand bei etwa 0,5 mm liegt. Auf diese Weise bleibt die Hautschwächung 18 für den Fahrgast unsichtbar, ohne dass die Airbag-Funktion beeinträchtigt würde.

Die Hauteinschnitte 36 werden durch ein Messerschneidverfahren an der fertigen Formhaut 14 eingebracht. Dazu wird die eine im Wesentlichen konstante Wandstärke aufweisende Formhaut mit ihrer Sichtseite 20 auf einer Stützplatte flach anliegend angesaugt und eine oder mehrere parallel angeordnete Messerklingen mittels eines Handhabungsautomaten entlang der vorgesehenen Einschnittlinien geführt. Durch entsprechend scharfe Messerklingen wird das flexible Hautmaterial zerspanungsfrei geteilt, so dass im Einbauzustand die Schnittflächen der Hauteinschnitte 36 wieder gegeneinander anliegen und das Eindringen von Schäummaterial verhindert wird.

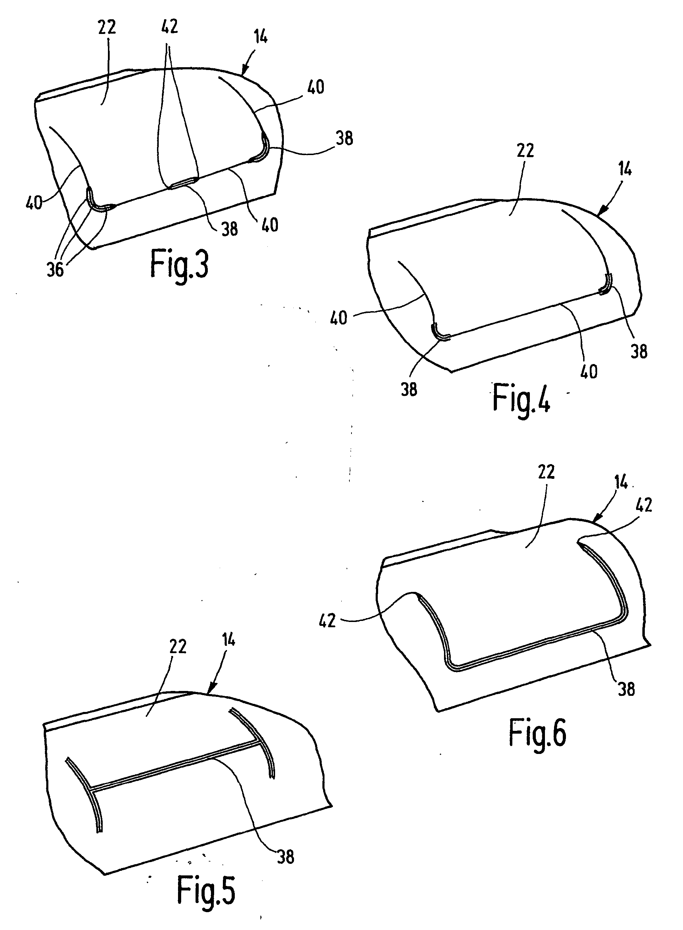

Bei der in Fig. 3 gezeigten Ausführungsform sind die Hauteinschnitte 36 als Mehrfachschnittlinie 38 in den Eckbereichen der U-förmigen Sollbruchlinie 16 und in deren durch den Airbag 28 zuerst beaufschlagten Zentralbereich angeordnet, während in den übrigen Abschnitten jeweils ein einzelner Hauteinschnitt 36 als Einzelschnittlinie 40 verläuft. Zweckmäßig geht der mittlere Hauteinschnitt der Mehrfachschnittlinien 38 durchgängig in die Einzelschnittlinien 40 über, wobei die äußeren Hauteinschnitte 36 an gemeinsamen Endpunkten 42 münden.

Die über eine gewisse Breite streifenförmig verlaufenden Mehrfachschnittlinien 38 vereinfachen die gegenseitige Ausrichtung mit den Wanddurchbrüchen 32 des Trägerteils 12 erheblich.

In abgewandelten Ausführungen verlaufen die Mehrfachschnittlinien 38 abschnittsweise oder über die gesamte Mehrfachschnittlinie vollständig parallel (Fig. 4), oder sie gehen erst an den Enden der Sollbruchlinie punktförmig ineinander über (Fig. 6). Grundsätzlich sind auch andere Konfigurationen der Sollbruchlinie möglich, beispielsweise eine in Fig. 5 gezeigte H-Form. Die Hauteinschnitte folgen abschnittsweise als Mehrfachschnittlinie. Auch ist es denkbar, dass mehrere Hauteinschnitte nur bereichsweise parallel laufen und in anderen Bereichen in gegebenenfalls unterschiedlicher Länge in einen gemeinsamen Hauteinschnitt münden.

## Patentansprüche

1. Vorrichtung zur Abdeckung eines Airbags (28) gegenüber dem Innenraum eines Fahrzeugs mit einem formsteifen Trägerteil (12) und einer damit verbundenen, einen Schusskanal (30) für den Airbag (28) überdeckenden Dekorhaut (14), welche an ihrer dem Trägerteil (12) zugewandten Rückseite mit einer entlang einer Sollbruchlinie (16) verlaufenden und durch den im Schusskanal (30) sich entfaltenden Airbag (28) aufreissbaren, innenraumseitig unsichtbaren Hautschwächung (18) versehen ist, die abschnittsweise als Mehrfachschnittlinie (38) durch mindestens zwei seitlich nebeneinander liegende Hauteinschnitte (36) gebildet ist, **dadurch gekennzeichnet, dass** die als Mehrfachschnittlinie (38) ausgebildeten Abschnitte der Sollbruchlinie (16) durch Abschnitte von durch jeweils einen einzigen Hauteinschnitt (36) gebildeten Einzelschnittlinien (40) miteinander verbunden sind.

2. Vorrichtung nach Anspruch 1, wobei die Mehrfachschnittlinie (38) drei seitlich nebeneinander liegende Hauteinschnitte (36) aufweist.

3. Vorrichtung nach Anspruch 1 oder 2, wobei wenigstens ein Hauteinschnitt der Mehrfachschnittlinie (38), vorzugsweise der mittlere Hauteinschnitt, durchgängig entlang der Sollbruchlinie (16) verläuft.

4. Vorrichtung nach einem der Ansprüche 1 bis 3, wobei die Hauteinschnitte (36) zumindest über einen Mittelabschnitt der Mehrfachschnittlinie (38) parallel zueinander verlaufen.

5. Vorrichtung nach einem der Ansprüche 1 bis 4, wobei der gegenseitige Abstand zwischen den Hauteinschnitten (36) der Mehrfachschnittlinie 0,1 mm bis 1,0 mm, vorzugsweise 0,5 mm beträgt.

6. Vorrichtung nach einem der Ansprüche 1 bis 5, wobei die Hauteinschnitte (36) eine unter der Wandstärke der Dekorhaut (14) liegende Schnitttiefe besitzen.

7. Vorrichtung nach einem der Ansprüche 1 bis 6, wobei der von den Hauteinschnitten (36) freigehaltene sichtseitige Restquerschnitt der Dekorhaut 0,1 mm bis 0,5 mm, vorzugsweise 0,3 mm beträgt.

8. Vorrichtung nach einem der Ansprüche 1 bis 7, wobei in den Krümmungsbereichen der Sollbruchlinie (16) und/oder einem durch den sich entfaltenden Airbag (28) zuerst beaufschlagten Zentralbereich der Sollbruchlinie (16) eine Mehrfachschnittlinie (38) vorgesehen ist.

9. Vorrichtung nach einem der Ansprüche 1 bis 8, wobei die Hauteinschnitte (36) der Mehrfachschnittlinie (38) an gemeinsamen Endpunkten (42) zusammenlaufen.

10. Vorrichtung nach einem der Ansprüche 1 bis 9, wobei die Hauteinschnitte (36) jeweils durch zwei spaltfrei gegeneinander anliegende Schnittflächen der Dekorhaut (14) begrenzt sind.

11. Vorrichtung nach einem der Ansprüche 1 bis 10, wobei die Sollbruchlinie (16) U-förmig oder H-förmig ausgebildet ist.

12. Vorrichtung nach einem der Ansprüche 1 bis 11, wobei die Hauteinschnitte (36) durch Messerschneiden vorzugsweise mittels einer selbsttätig arbeitenden Schneideinrichtung gebildet sind.

13. Vorrichtung nach einem der Ansprüche 1 bis 11, wobei die Hauteinschnitte (36) durch Laser- oder Ultraschallschneiden rückseitig in die Dekorhaut (14) eingebracht sind.

14. Vorrichtung nach einem der Ansprüche 1 bis 13, wobei die Dekorhaut (14) vorzugsweise im Pulversinterverfahren als Kunststoff-Formhaut ausgebildet ist.

15. Vorrichtung nach einem der Ansprüche 1 bis 14, wobei die Dekorhaut (14) aus thermoplastischem Polyurethan oder thermoplastischem Polyolefin besteht.

16. Instrumententafel für ein Kraftfahrzeug umfassend eine Vorrichtung (10) nach einem der vorangehenden Ansprüche.

## Claims

1. Device for covering an airbag (28) with respect to the passenger compartment of a vehicle, having a dimensionally rigid carrier (12) and, connected to the latter, a decorative skin (14) which covers over a firing channel (30) for the airbag (28) and is provided on its rear side, facing the carrier (12), with a weakening of the skin (18) which extends along a predetermined breaking line (16), can be torn open by the airbag (28) unfolding in the firing channel (30), is not visible from the passenger compartment and is formed in certain portions as a multiply cut line (38) by at least two skin incisions (36) lying laterally next to one another, **characterized in that** the portions of the predetermined breaking line (16) that are formed as a multiply cut line (38) are connected to one another by portions of individually cut lines (40) respectively formed by a single skin incision (36).

2. Device according to Claim 1, the multiply cut line (38) having three skin incisions (36) lying laterally next to one another.

3. Device according to Claim 1 or 2, at least one skin incision of the multiply cut line (38), preferably the central skin incision, running continuously along the predetermined breaking line (16).

4. Device according to one of Claims 1 to 3, the skin incisions (36) running parallel to one another, at least over a central portion of the multiply cut line (38).

5. Device according to one of Claims 1 to 4, the mutual distance between the skin incisions (36) of the multiply cut line being 0.1 mm to 1.0 mm, preferably 0.5 mm.

6. Device according to one of Claims 1 to 5, the skin incisions (36) having a cut depth that is less than the wall thickness of the decorative skin (14).

7. Device according to one of Claims 1 to 6, the remaining cross section of the decorative skin on the visible side that is kept free from the skin incisions (36) being 0.1 mm to 0.5 mm, preferably 0.3 mm.

8. Device according to one of Claims 1 to 7, a multiply cut line (38) being provided in the regions of curvature of the predetermined breaking line (16) and/or a central region of the predetermined breaking line (16) that is acted on first by the unfolding airbag (28).

9. Device according to one of Claims 1 to 8, the skin incisions (36) of the multiply cut line (38) converging at common end points (42).

10. Device according to one of Claims 1 to 9, the skin incisions (36) being bounded in each case by two cut surfaces of the decorative skin (14) that lie against one another without any gap.

11. Device according to one of Claims 1 to 10, the predetermined breaking line (16) being formed in a U-shaped or H-shaped manner.

12. Device according to one of Claims 1 to 11, the skin incisions (36) being formed by knife cutting, preferably by means of an automatically operating cutting means.

13. Device according to one of Claims 1 to 11, the skin incisions (36) being introduced into the decorative skin (14) on the rear side by laser or ultrasonic cutting.

14. Device according to one of Claims 1 to 13, the decorative skin (14) being formed preferably by the powder sintering process as a moulded plastic skin.

15. Device according to one of Claims 1 to 14, the decorative skin (14) consisting of thermoplastic polyurethane or thermoplastic polyolefin.

16. Instrument panel for a motor vehicle comprising a device (10) according to one of the preceding claims.

## Revendications

1. Dispositif pour recouvrir un airbag (28) vis-à-vis de l'habitacle d'un véhicule comprenant une partie de support de forme rigide (12) et une peau décorative (14) reliée à celle-ci, recouvrant un canal d'éjection (30) pour l'airbag (28), laquelle peau décorative est pourvue sur son côté arrière tourné vers la partie de support (12) d'un affaiblissement de peau (18) invisible du côté de l'habitacle, s'étendant le long d'une ligne destinée à la rupture (16) et pouvant être déchiré par l'airbag (28) se déployant dans le canal d'éjection (30), cet affaiblissement étant formé en partie sous forme de ligne de coupe multiple (38) par au moins deux entailles de peau (36) situées latéralement l'une à côté de l'autre, **caractérisé en ce que** les portions de la ligne destinée à la rupture (16) réalisées sous forme de ligne de coupe multiple (38) sont connectées ensemble par des portions de lignes de coupe individuelles (40) formée par une entaille de peau (36) individuelle respective.

2. Dispositif selon la revendication 1, dans lequel la ligne de coupe multiple (38) présente trois entailles de peau (36) situées latéralement l'une à côté de l'autre.

3. Dispositif selon la revendication 1 ou 2, dans lequel au moins une entaille de peau de la ligne de coupe multiple (38), de préférence l'entaille de peau centrale, s'étend en continu le long de la ligne destinée à la rupture (16).

4. Dispositif selon l'une quelconque des revendications 1 à 3, dans lequel les entailles de peau (36) s'étendent parallèlement l'une à l'autre au moins sur une portion centrale de la ligne de coupe multiple (38).

5. Dispositif selon l'une quelconque des revendications 1 à 4, dans lequel la distance mutuelle entre les entailles de peau (36) de la ligne de coupe multiple mesure 0,1 mm à 1,0 mm, de préférence 0,5 mm.

6. Dispositif selon l'une quelconque des revendications 1 à 5, dans lequel les entailles de peau (36) possèdent une profondeur de coupe inférieure à l'épaisseur de la paroi de la peau décorative (14).

7. Dispositif selon l'une quelconque des revendications 1 à 6, dans lequel la section transversale résiduelle de la peau décorative exempte des entailles de peau (36) du côté visible mesure 0,1 mm à 0,5 mm, de préférence 0,3 mm.

8. Dispositif selon l'une quelconque des revendications 1 à 7, dans lequel dans les régions de courbure de la ligne destinée à la rupture (16) et/ou dans une région centrale de la ligne destinée à la rupture (16) sollicitée en premier par l'airbag se déployant (28), on prévoit une ligne de coupe multiple (38).

9. Dispositif selon l'une quelconque des revendications 1 à 8, dans lequel les entailles de peau (36) de la ligne de coupe multiple (38) se rejoignent en des points d'extrémité commun (42).

10. Dispositif selon l'une quelconque des revendications 1 à 9, dans lequel les entailles de peau (36) sont limitées à chaque fois par deux surfaces de coupe de la peau décorative (14) s'appliquant l'une contre l'autre sans fente.

11. Dispositif selon l'une quelconque des revendications 1 à 10, dans lequel la ligne destinée à la rupture (16) est réalisée en forme de U ou en forme de H.

12. Dispositif selon l'une quelconque des revendications 1 à 11, dans lequel les entailles de peau (36) sont formées par des découpes au couteau de préférence au moyen d'un dispositif de coupe fonctionnant automatiquement.

13. Dispositif selon l'une quelconque des revendications 1 à 11, dans lequel les entailles de peau (36) sont pratiquées par découpe au laser ou au ultrasons du côté arrière dans la peau décorative (14).

14. Dispositif selon l'une quelconque des revendications 1 à 13, dans lequel la peau décorative (14) est réalisée de préférence dans un procédé de frittage de poudre sous forme de peau moulée en plastique.

15. Dispositif selon l'une quelconque des revendications 1 à 14, dans lequel la peau décorative (14) se compose de polyuréthanne thermoplastique ou de polyoléfine thermoplastique.

16. Tableau de bord pour un véhicule automobile comprenant un dispositif (10) selon l'une quelconque des revendications précédentes.
